(19) Europäisches Patentamt
European Patent Office
Office européen des brevets

(11) **EP 2 282 405 B1**

(12) # EUROPEAN PATENT SPECIFICATION

(45) Date of publication and mention
of the grant of the patent:
**14.09.2016 Bulletin 2016/37**

(51) Int Cl.:
***H04B 1/10*** *(2006.01)*

(21) Application number: **10169812.4**

(22) Date of filing: **16.07.2010**

(54) **Signal communication apparatus and related receiver**

Signalkommunikationsvorrichtung und entsprechender Empfänger

Appareil de communication de signaux et récepteur correspondant

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **31.07.2009 IT MI20091381**

(43) Date of publication of application:
**09.02.2011 Bulletin 2011/06**

(73) Proprietor: **STMicroelectronics Srl**
**20864 Agrate Brianza (IT)**

(72) Inventors:
• **Lombardo, Giovanni**
**91011, ALCAMO (TP) (IT)**

• **Giombanco, Salvatore**
**96010, CASSARO (SR) (IT)**
• **Grande, Michele**
**96012, AVOLA (SR) (IT)**
• **Tumminaro, Salvatore**
**93010, MARIANOPOLI (CL) (IT)**
• **Marino, Filippo**
**95030, TREMESTIERI ETNEO (CT) (IT)**

(74) Representative: **Bosotti, Luciano et al**
**Buzzi, Notaro & Antonielli d'Oulx S.r.l.**
**Via Maria Vittoria, 18**
**10123 Torino (IT)**

(56) References cited:
**WO-A1-2004/042543     WO-A2-03/009551**
**US-A- 4 833 418**

## Description

The present invention relates to a receiver for a signal communication apparatus and related signal communication apparatus.

It is known the presence of galvanic isolation in applications in which the communication between circuits operating at high supply voltages (even hundreds of volts) and circuits rather operating at low supply voltages is required; the galvanic isolation must ensure the safety of the user coming in contact with the low voltage interface. The applications needing such a requirement are typically those regarding the power suppliers directly bonded to the power network, but also the industrial applications in which driving high voltage loads is required.

A typical example are the "high side switch drivers" in which driving switches feeding inductive loads by means of high voltages is required. In such a case the potential differences that may dynamically develop between the low voltage part and the high voltage part may also reach thousands of volts per microsecond.

Several apparatuses for achieving the galvanic isolation presently exist.

One of these consists in using an integrated transformer. The latter is made of a pile structure in which the secondary winding generally consists of the metal layer arranged at the lowermost level, the primary winding consists of the metal layer arranged at the uppermost level and the isolation between the two windings consists of several layers of dielectric arranged between the two metal layers the thickness of which depends on the desired isolation level. Alternatively, the secondary winding may be made of the metal layer arranged at the uppermost level, the dielectric layer is inserted thereon and the primary winding is finally made of an additional metal layer. The isolation transformer is made on the die of the receiver. The die driver contains the transmitter that, through the bonding, is bonded to the primary of the isolation transformer. The secondary of the transformer is bonded to the receiver which processes the transmitted signal. The data flow may also occur from the secondary to the primary, in case of constructing a two-way channel. In order to transfer information through the isolated interface, the signals must be conveniently processed by a modulation technique. This type of component permits to obtain a high bit rate, good reliability and isolation capacity. This configuration requires, however, the addition of processing steps to construct the transformer (e.g. for increasing the thickness of the isolating layer in order to achieve the suitable isolation rate), as well as the use of bonding wires for bonding the transmitter of the die driver to the transformer itself.

Another galvanic isolation apparatus comprises a structure based on a transmission of the wireless type and it is described in patent US 2008/0311862. The two chips are assembled one on top of the other and the isolation is achieved through an interposed isolating layer. The electromagnetic coupling is obtained trough a couple of turns, particularly by means of the magnetic field produced by the power flowing on the transmitting turn. The thickness of the upper chip (e.g. the chip of the transmitter) is decreased, by lapping, to maximize the coupling between the two turns. In order to transfer information through the isolated interface, the signals must be conveniently processed by a modulation technique. This configuration has the advantage of not requiring additional processing steps as well as bonding wires between the two chips. It has however the disadvantage of a low coupling coefficient and its high variability, depending on the thickness tolerance after the die lapping, the tolerance of the isolating layer thickness and the tolerance of the alignment between the two chips.

A further galvanic isolation apparatus comprises a structure based on a transmission of the wireless type and it is still described in patent US 2008/0311862. The two chips, in this case, are assembled side-by-side and the isolation is made through an isolating layer placed under the two chips. The electromagnetic coupling is achieved through a couple of turns, particularly by means of the magnetic field produced by the power flowing on the transmitting turn. In order to transfer information through the isolated interface, the signals must be conveniently processed by a modulation technique. This configuration also has the advantage of not requiring additional processing steps as well as bonding wires between the two chips. It has however the disadvantage of a coupling coefficient which is lower than the previous structure and highly variable according to the tolerance of the alignment between the two chips and the tolerance of the distance between the two chips.

An inherent problem of structures with coupled inductors is the presence of parasite capacitances between the inductors themselves. These capacitances introduce an unwanted capacitive coupling between the turns thus causing currents (proportional to the parasite capacitances according to the formula $I = C\dfrac{dv}{dt}$) at potential variations between the transmission and reception circuits.

The faster the potential variation, the higher these currents are (they may also be of the order of tens of kV/us) and the input impedance being non-null, they change the polarization of the receiver circuits thus causing the loss of data and possibly the breakage thereof. This phenomenon is commonly referred to as noise due to a common-mode transient.

The turns of said galvanically isolated interfaces have electric features assimilable to those of a transformer and therefore the transmitting turn may be denoted as primary and the receiving turn may be denoted as secondary.

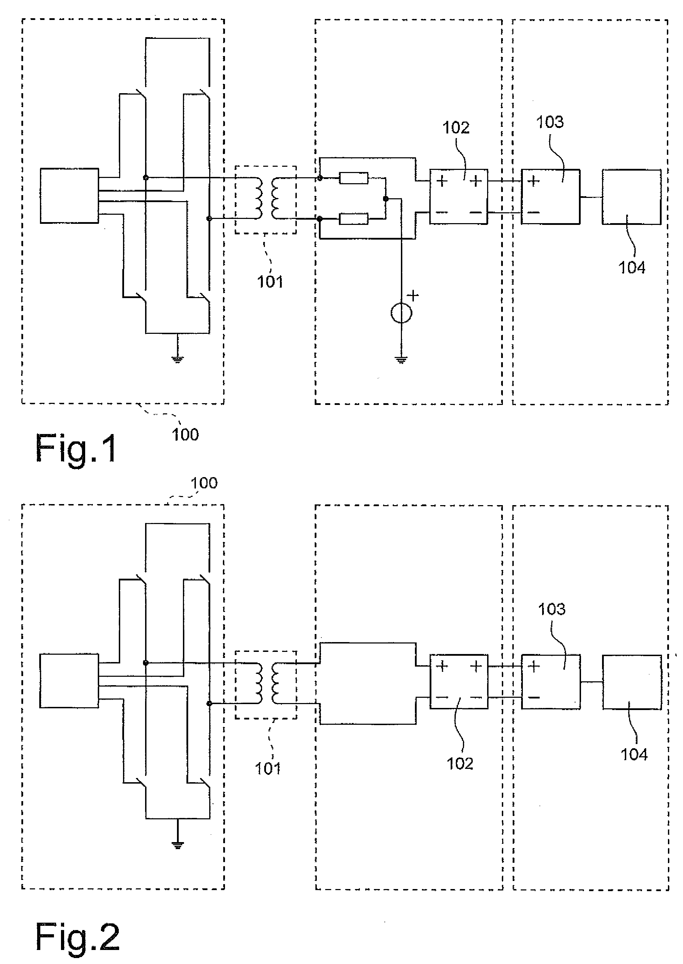

The data transmission through the primary and the secondary is usually achieved by means of a modulated radiofrequency signal or by sending current pulses. A circuit diagram of a typical transmitter-receiver architecture in which microantennas are used, is shown in figures 1 and 2 (in these figures the microantennas are schematized as inductors). The transmitter-receiver system comprises a transmitter 100, an interface 101, a receiver comprising an amplifier 102, a comparator 103 and a logic circuitry 104.

The diagrams shown display a differential architecture both to the primary and to the secondary, such a solution permits to obtain a higher immunity to common-mode disturbances. According to a variation of the shown diagram, one or both the inductors have a terminal each referred to its ground GND.

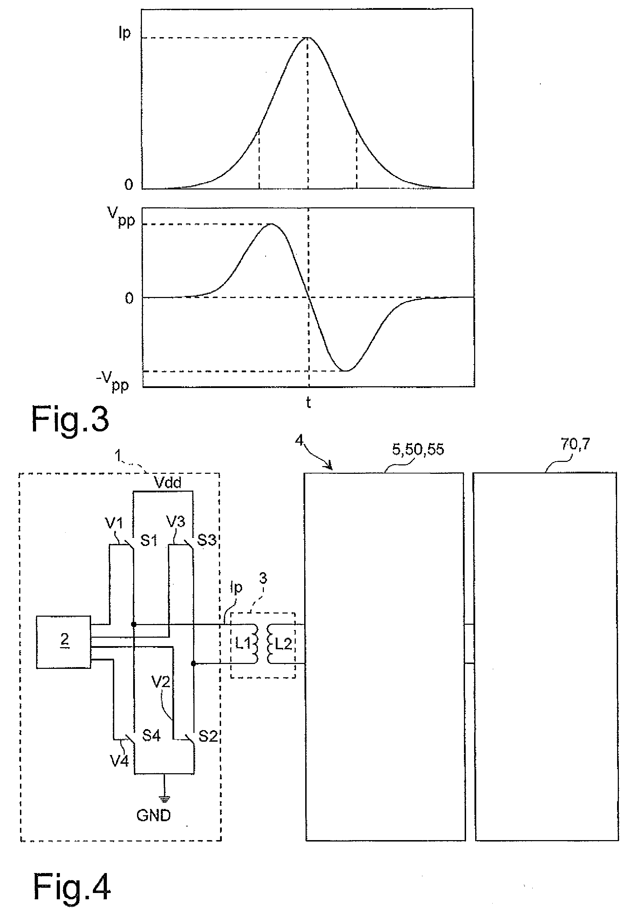

In order to better understand how this type of architecture may be exploited to transmit information, it is useful to observe the waveforms related to the transmission of a current pulse Ip through coupled inductors, as seen in figure 3.

The voltage at the receiver has a positive pulse with a maximum width Vpp followed by a negative one with a minimum width -Vpp, when the current pulse Ip to the transmitter is positive and vice versa if the current pulse is negative. Therefore, by associating information with the current pulse orientation, data may be transmitted through the isolation interface.

A typical coding/decoding technique consists in associating a positive (negative) current pulse with a positive (negative) side of a logic signal, as described in patent US2008/0069249. The signal received at the secondary is amplified before being decoded; if the coupling coefficient of the two inductors is sufficiently great, the signal at the secondary may have a sufficiently wide width to permit the decoding without using the amplifier stage. Using current pulses for transmitting the signal permits to decrease the system consumptions and increase the transmission bit rate. Furthermore, by exploiting both pulses at the secondary, the signal transmission may be strengthened thus making the decoding more reliable.

By generating a transmission current pulse with a convenient Gaussian form, a waveform may be obtained at the secondary with pulses of the desired duration thus minimizing the system current consumptions. The used technology imposes a limit lower than the pulse duration, as the band of the received signal being inversely proportional to the duration of the transmitted pulse, it is necessary to prevent it from urging the resonance frequency of the receiver (basically depending on parasites).

Furthermore if the pulse duration is lower than or comparable to the time constant of the inductor (depending on its inductance and parasite series impedance), the received signal will have the second pulse more weakened than the first, which represents a limitation from the point of view of the strength of the system in the presence of disturbances. Indeed, noises injected into the receiver from close circuits which are particularly noisy (due to an imperfect symmetry in the layout of the differential circuits) may be detected as pulses from the transmitter and therefore erroneously decoded. This problem may be obviated by duplicating the information, i.e. by transmitting two consecutive pulses which code the same data and minimizing the possibility that the noise pulse is decoded as valid, but this results in decreasing the maximum bit rate. Therefore, the optimal duration of the pulse must be higher than the typical time constant of the inductor and must be such that the received signal does not urge the typical resonance frequency of the receiver. Document WO 2004/042543 A1 discloses a circuit arrangement for a microcontroller having an improved energy consumption which is achieved in that the microcontroller is connected to its operating clock only during evaluation of a signal. A switching means through-connecting the operating clock when a "logic 1" signal is present at the control input is arranged between the microcontroller and the clock generator. This "logic 1" signal is generated by setting a flip-flop for example, when receiving a remote control signal.

Document US 4 833 418 A discloses a compensation circuit to reduce the magnitude of the differential offset voltage between the DC components of the output signals generated by a differential amplifier having an offset control input terminal to control the DC differential offset of the output signals of the differential amplifier. The circuit includes an isolation circuit that isolates the DC components from the AC components of each of the output signals from the differential amplifier to provide a differential signal proportional to the differential offset voltage and an amplifying circuit that amplifies the differential signal and generates a compensation signal proportional to the differential offset voltage to be fed back to the offset control input terminal to control the DC differential offset of the differential amplifier.

Finally, WO 03/009551 A2 concerns a receiver for digital data for connection to a preceding signal path including a received signal input terminal connected to a higher frequency gain circuit that shows highest transfer amplitude at the upper data frequency within the lower to upper data frequency range where the signal has been attenuated in its higher frequency components in the preceding signal path and providing an amplified signal at an amplified signal output terminal, The receiver also includes a latching circuit with two threshold levels, the latching structure being connected with an input terminal to the amplified signal output terminal and an output terminal providing a digital output signal. In view of the state of the art, it is an object of the present invention to provide a receiver for a signal communication apparatus and related communication apparatus which is more noise-immune.

The invention is defined by the features of claim 1. Further embodiments are defined in the dependent claims.

In accordance with the present invention, such an object is achieved by a receiver of a signal communication apparatus, said apparatus comprising a transmitter adapted to transmit at least a coded signal, said receiver for receiving the signal and a wireless interface interposed between the transmitter and the receiver and comprising a transmitting antenna and a receiving antenna, said receiver comprising means for decoding the received signal, wherein the receiver comprises first means coupled to the receiving antenna and capable of triggering said means of decoding the received signal if the value of the received signal is outside a logical hysteresis consisting of a first logic threshold having a value smaller than the value of the direct current component of the received signal and a second logic threshold having a value greater than the value of the direct current component of the received signal, said first means comprising second means adapted to compare said received signal to said first and said second logic thresholds and generate logic signals only if the value of said received signal is below said first logic threshold or above said second logic threshold, said received signal being a differential signal with a first component and a second component and said second means are adapted to compare the components of the differential signal received to said first and said second logic thresholds and generate logic signals only if the value of one of said components of the received differential signal is below said first logic threshold or above said second logic threshold and the other component of the differential signal is respectively above said second logic threshold or below said first logic threshold, said first means comprising third means adapted to generate a pulse to trigger said decoding means of the received signal only if the generation of a logic signal due to the comparison of the first component of the differential signal to one of the first and second logic thresholds corresponds to the generation of a logic signal due to the comparison of the second component of the differential signal with the other of the first or second logic threshold. The features and advantages of the present invention will be apparent from the following detailed description of a practical embodiment thereof, shown by way of non-limiting example in the accompanying drawings, in which:

figure 1 shows a communication system with a galvanic isolation interface in a differential configuration both to the primary and to the secondary;

figure 2 shows a communication system as shown in figure 1 but with a current amplifier;

figure 3 shows the waveform of a current pulse transmitted by the primary and the corresponding waveform of the signal received at the secondary;

figure 4 shows a communication system with a galvanic isolation interface in accordance with the present invention;

figure 5 shows a diagram of the logic circuitry of the communication system transmitter in figure 4;

figure 6a shows the receiver for a communication system in accordance with a first embodiment of the invention;

figure 6b shows the receiver for a communication system in accordance with a variation of the first embodiment of the invention;

figure 7 shows a circuit implementation of the amplifier in figure 6a or 6b;

figure 8 shows another circuit implementation of the amplifier in figure 6a or 6b;

figure 9 shows a block diagram of the input stage of the receiver in figure 6a or 6b in accordance with a variation of the first embodiment of the invention;

figure 10a is a circuit diagram of the input stage in figure 9;

figure 10b is another circuit diagram of the input stage in figure 9;

figure 11 shows the receiver for a communication system in accordance with a second embodiment of the invention;

figure 12 shows the time diagrams of the signals involved in the comparator block of the discriminator in figure 11 in the presence of disturbances;

figure 13 shows a more detailed logic block of the discriminator in figure 11;

figure 14 shows the time diagrams of the signals involved in the comparator block of the discriminator in figure 11 in the absence of disturbances;

figure 15 shows the time diagrams of the signals involved in the discriminator in figure 11 in the absence of disturbances;

figure 16 shows the receiver for a communication system in accordance with a third embodiment of the invention.

Figure 4 shows a communication system with a galvanic isolation interface in accordance with the present invention. Said system is of the differential type both in transmission and in reception but it may also be of the non-differential type. The system comprises a transmitter 1 with a logic circuitry 2 receiving at the input the data to be transmitted and the synchronizing signal (clock) and generates a coded signal, preferably, at the clock sides, a current pulse Ip as shown in figure 3. The pulse direction denotes the logic level of the data to be transmitted. The transmitter comprises four switches S1-S4, S2-S3 in a bridge configuration bonded between the voltage Vdd and the ground GND and having the middle points bonded to the primary L1, i.e. to the transmitting antenna or turn of the integrated, galvanic isolation interface 3 preferably of the wireless type. The switches are driven by the logic circuitry 2 by means of the signals V1-V4; the logic circuitry 2 is adapted to switch off the switches S1, S2 to generate the current pulse Ip which codes data at a high (or low) logic level and the switches S3, S4 for coding data at a low (or high) logic level. By conveniently controlling the signal sides V1-V4, the waveform of the current pulse Ip may be modeled such that it approximates a Gaussian pulse with the desired duration, as described in figure 3.

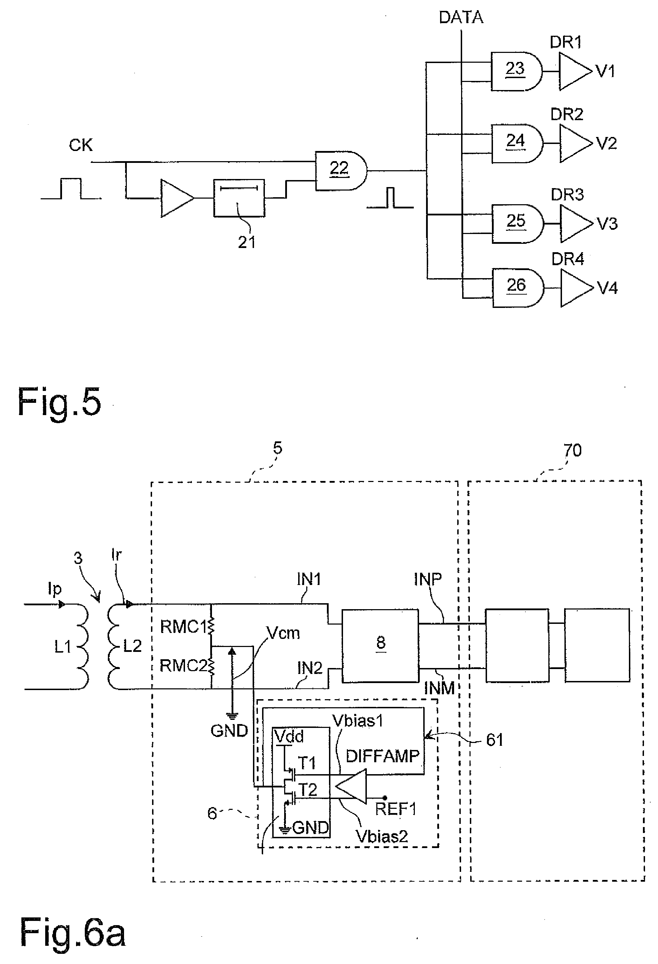

A possible implementation of the logic circuitry 2 of the transmitter is shown in figure 5. At the positive side of the clock signal CK, a pulse of about the same duration as the current pulse to be transmitted is generated, through the delay cell 21 and the AND-type logic port 22. The signal at the output of the AND port 22 is sent to four AND ports 23-26 also having at the input the data signal DATA, the AND ports 23-26 implement a demultiplexer generating four signals according to the logic level of the data to be transmitted. These signals are at the input of four drivers DR1-DR4 which generate the signals V1, V2, V3, V4 for driving the switches S1-S4. The four drivers DR1-DR4 are conveniently dimensioned to generate the Gaussian current pulse Ip. In the absence of transmission, the switches S2 and S4 are switched off, this ensures that in the presence of common-made transients between the primary winding L1 and the secondary winding L2, i.e. the receiving antenna or turn of the interface 3, the currents flowing are "conveyed" towards the ground GND. The turns L1 and L2 have electric features assimilable to those of a transformer.

The system comprises a receiver 4 preferably provided with an input stage 5, 50, 55 which amplifies the signal Ir present on the secondary L2 of the interface 2; if the transmitted signal is the signal Ip, the signal Ir has a positive pulse with a maximum width Vpp followed by a negative pulse with a minimum width -Vpp, when the current pulse Ip to the transmitter is positive and vice versa if the current pulse is negative. The receiver is provided with a decoder 70, 7 which decodes the received pulses and reassembles the data signal DATA and the clock signal CK.

In accordance with a first embodiment of the invention, the input stage 5, 50 comprises a circuit for rejecting the common-mode transients, i.e. adapted to decrease the input impedance in the presence of parasite currents due to a common-mode transient and therefore adapted to compensate for the parasite currents flowing between the transmitting turn and the receiving turn at the potential variations between the input and the output of the galvanic isolation interface.

The approaches used for implementing the input stage 5, 50 are of two types: one consists in amplifying the currents outputted from the secondary, the other consists in amplifying the voltage at its ends.

In accordance with the first embodiment of the present invention, at the input stage 5 to the differential received signal Ir, a common-mode component is added as needed to polarize the amplifier through the resistors RMC1 and RMC2 and the output Vcm of the circuit 6 for rejecting the common-mode transients, as shown in figure 6a. The latter provides the voltage Vcm at the output, between the common terminal of the two resistors RMC 1 and RMC2 and the ground GND, adjusted to the reference value REF1 and capable of compensating for the parasite currents flowing between the primary L1 and the secondary L2 of the interface 3 at the potential variations between input and output of the galvanic isolation interface.

Circuit 6 preferably comprises a closed-loop buffer 61 but an open-loop buffer or any other solution may also be used, provided that it has the features previously defined. The closed-loop buffer 61 comprises a differential stage DIFFAMP driving the output stage 62 consisting of the series of two transistors T1 and T2, arranged between the supply voltage Vdd and the ground GND, capable of providing (or taking up) the currents due to the parasite effects; the signals Vbias1 and Vbias2 from the differential stage DIFFAMP drive the PMOS transistor T1 and the NMOS transistor T2, respectively. The voltage Vcm is the voltage on the common output terminal of the transistors T1 and T2 and the differential stage has the voltage Vcm on the inverting input terminal and the voltage REF1 on the non-inverting input terminal.

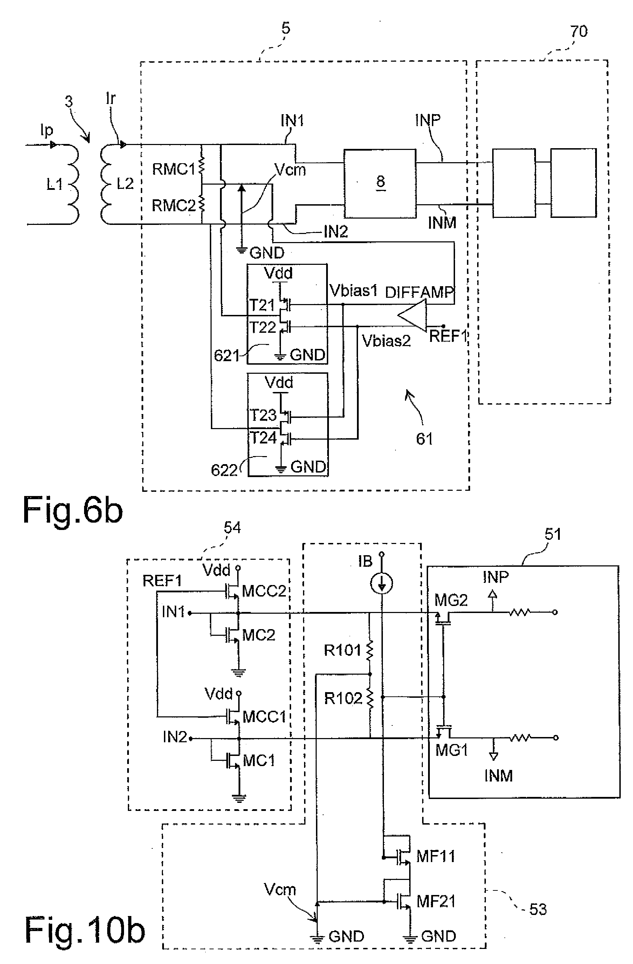

In accordance with a variation of the first embodiment of the present invention shown in figure 6b, circuit 6 comprises a buffer 61 comprising a differential stage DIFFAMP driving two output stages 621 and 622, each consisting of a series of two transistors T21, T22 and T23, T24, arranged between the supply voltage Vdd and the ground GND, capable of providing (or taking up) the currents due to the parasite effects; the signals Vbias1 and Vbias2 from the differential stage DIFFAMP drive the PMOS transistor T21, T23 and the NMOS transistor T22, T24, respectively. The voltage Vcm is the voltage on the common output terminal of the transistors T1 and T2. The differential stage has the voltage Vcm on the inverting input terminal and the voltage REF1 on the non-inverting input terminal and the outputs of the two stages 621 and 622 are bonded to the terminals of the inductance L2.

Input stage 5 preferably comprises an amplifier 8 which may be implemented in different ways; in general, its function is amplifying the high frequency components of the signal Ir by keeping the direct current component unaltered.

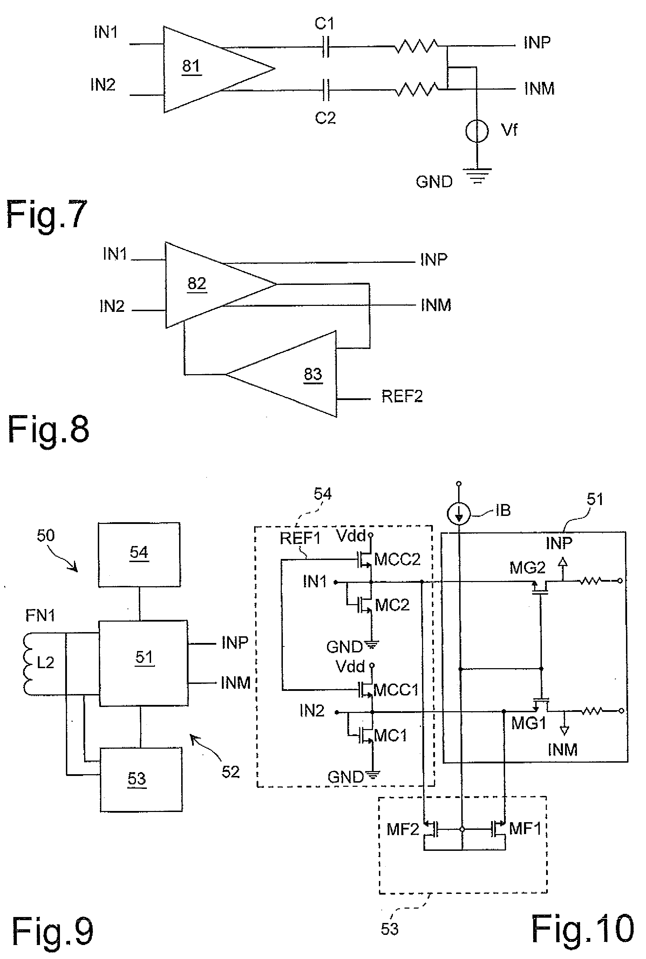

A first implementation of the amplifier 8, shown in figure 7, comprises a wideband-voltage differential amplifier 81 with a cut-off frequency of about 2fp, with fp being a band-centre frequency of the signal Ir received at the secondary L2 and at the input of the terminals IN1 and IN2. The output direct current component on the terminals INP and INM is filtered through the capacitances C1 and C2 and applied again through the tension generator Vf to permit the correct polarization of the circuit downstream of the amplifier.

A second implementation of the amplifier 8, shown in figure 8, comprises a fast comparator 82 fed back with an error amplifier 83 which resets the offset of the signal Ir at the input of the terminals IN1 and IN2 and keeps the direct current component of the signal at the output on the terminals INP and INM at the value required to polarize the circuit downstream of the amplifier. The error amplifier 83 is adapted to compare the signal at the output of the fast comparator 82 to a reference signal REF2.

In accordance with another variation of the first embodiment of the invention, if the signal to be amplified on the secondary L2 is a current signal, using a current amplifier circuit is needed; figure 9 describes a different input stage 50 usable in the receiver in figure 4 and considered as a variation of the input stage 5. It comprises a transimpedance stage 51 to amplify the current signal Ir received and present on the secondary L2 and from a stage 52 for rejecting the noises due to the common-mode transients. In particular, the rejection stage 52 comprises a clamp circuit 54 which takes up the inputting currents and from a common-mode voltage follower 53 adapted to modify the polarization of the transimpedance stage 51 in order to balance the effect of the parasite currents.

The transimpedance stage 51, as better seen in figure 10a, comprises MOS transistors MG1 and MG2 which are polarized in a common-gate configuration. The clamp circuit 54 has the MOS transistors MC1 and MC2 taking up the common-mode currents inputted from the terminals of the secondary L2 and the MOS transistors MCC1-MCC2 providing the currents outputted from the abovementioned terminals. The presence of the clamp circuit 54 only may not to be sufficient to oppose the effect of the currents due to the common-mode transients; for such a reason stage 53 has been added, permitting to dynamically modify the polarization of the transistors MG1-MG2 to increase the current they dispense towards the input terminals IN1 and IN2. The input terminals IN2 and IN1 are bonded to respective source terminals of the transistors MG1 and MG2, respective gate and drain terminals of MOS transistors MC1 and MC2, and respective source terminals of the transistors MF1 and MF2 belonging to stage 54. The latter comprises the differential stage of the two transistors MF1 and MF2 having the gate and drain terminals in common. The MOS transistors MC1 and MC2 have the source terminals bonded to the ground GND and the drain terminals bonded to the respective source terminals of the transistors MCC1-MCC2 having the drain terminals bonded to a supply voltage VDD and the gate terminals bonded to the reference voltage REF1. The drain terminals of the transistors MG1 and MG2 are the output terminals INP and INM of the amplifier circuit 50; a polarization current IB is sent to the common gates of the transistors MG1-MG2 and MF1-MF2.

Alternatively, as seen in figure 10b, stage 53 may be obtained by the series of two resistors R101 and R102 bonded between the terminals IN1 and IN2 and the series of two transistors MF11 and MF21 having the drain terminals bonded to the respective gate terminals and the source terminal of the transistor MF21 bonded to the ground GND and the drain terminal bonded to the source terminal of the transistor MF11 having the drain terminal bonded to the polarization current generator IB and the gate terminals of the transistors MG1 and MG2. The common-mode voltage Vcm insists on the gate terminal of the transistor MF22.

The signal at the output of the input stage 5, 50 is sent to a decoder 70 of the known type for decoding the received signal.

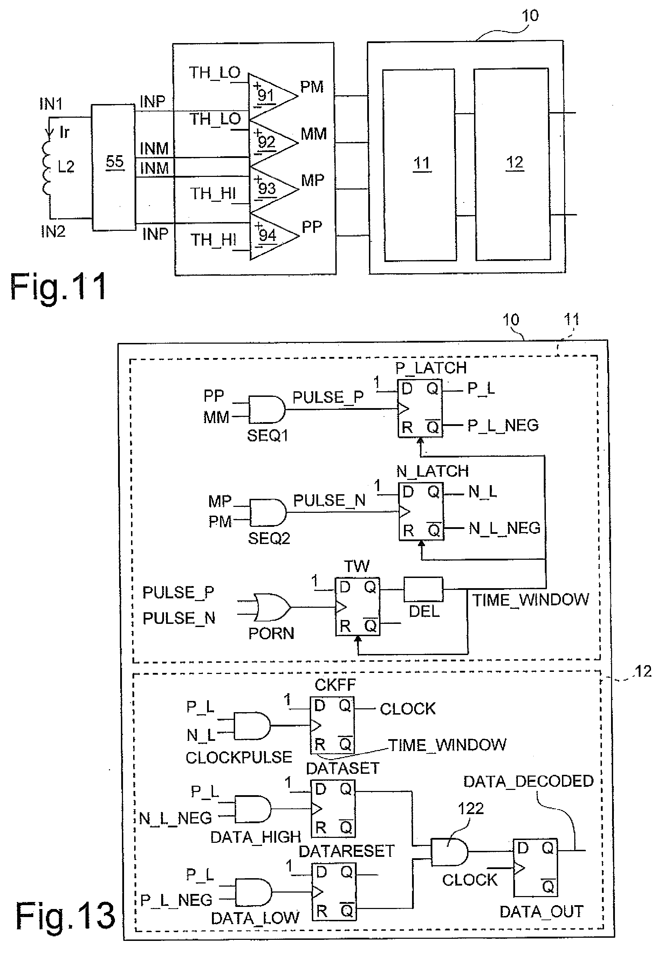

In accordance with a second embodiment of the invention, the signal Ir present on the receiving turn L2 and amplified by an amplifier 55 of the known type is sent through the terminals INP and INM to a discriminator stage 7 adapted to decode the received signals and best shown in figure 11. If amplifying the signal Ir present on the turn L2 is not required, the inputs INP and INM of the discriminator 7 match with the terminals INI and IN2 of the turn L2.

Said discriminator 7 comprising means 9, 11 capable of triggering decoding means 12 of the received signal only if the value of the waveform of the received signal Ir is outside a logic hysteresis consisting of a first logic threshold (TH-LO) having a value smaller than the value of the direct current component Irdc of the received signal and a second logic threshold (TH_HI) having a value greater than the value of the direct current component of the received signal.

The discriminator stage 7 comprises a comparator stage 9 and a logic block 10. If the signal Ir is a differential signal, the comparator stage 9 comprises four comparators 91-94 adapted to turn the pulses of the differential signal Ir at the input through the terminals INP and INM into four logic pulses PM, MM, MP and PP by comparing the input signals to the reference logic thresholds TH_LO and TH-HI, the threshold TH_HO of which has a value smaller than the direct current component of the differential signals INP and INM, while the threshold TH_HI has a value greater than the direct current component of the signals INP and INM. Thereby, a voltage range is targeted within which the signal variations are ignored. By conveniently adjusting these thresholds, a part of the noise at the input of the receiver or possibly introduced by the amplifier itself may be filtered. The logic block 10, according to the order of reception of the signals PM, MM, MP and PP, decodes the data and generates an output clock which is synchronous with the decoded data.

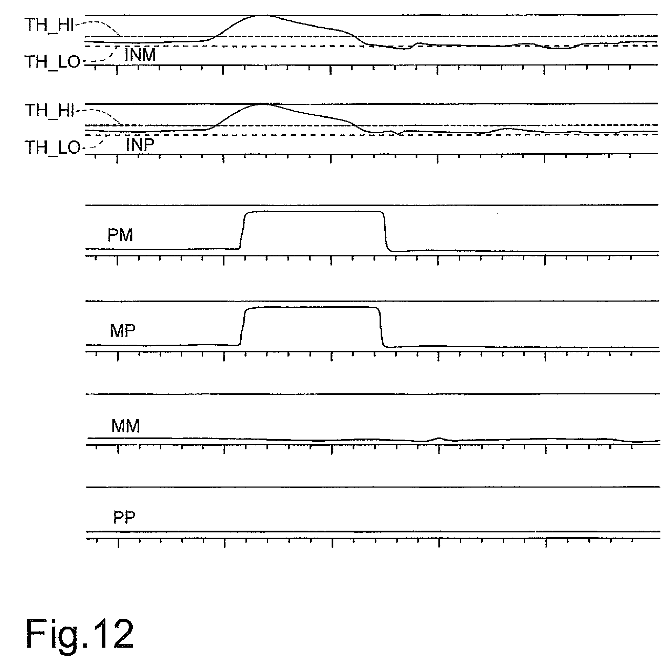

However, this expedient is not enough to avoid possible disturbances from being interpreted as useful signals. Indeed, a common-mode noise could be introduced from the outside of the amplification chain through the ground or power supply or due to an imperfect symmetry of the layout of the differential circuits. If the width of this noise is such that both the signal INP and the signal INM are either above or below the thresholds, the comparators 91-94 switch and thus generate logic signals that could be interpreted as a useful signal, as seen in figure 12. For this reason, performing a time sequence control of the logic signals is required to filter a possible disturbance.

The discriminator 7 and in particular the logic block 10 is preferably further capable of targeting possible spurious input signals caused by disturbances. Indeed, if the sequence of the received pulses does not meet the predicted order, the received data and the corresponding clock are considered invalid and thus ignored.

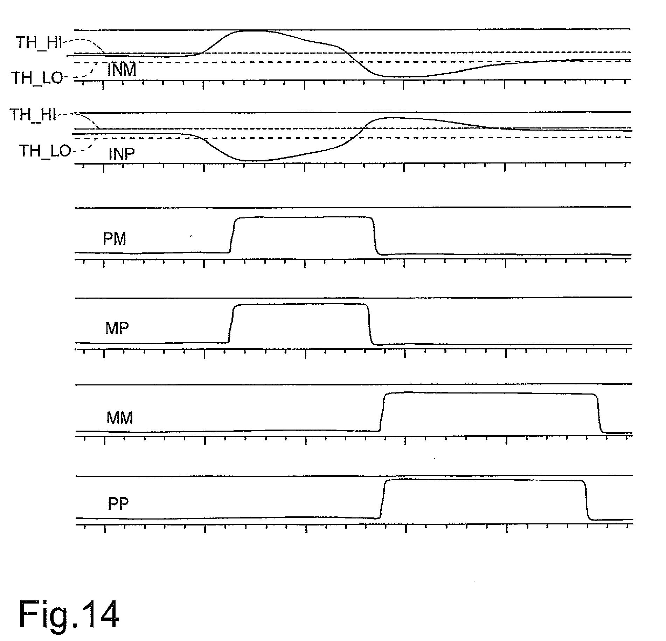

The logic block 10 preferably comprises other means SEQ1, SEQ2 adapted to allow pulses to be generated for decoding the received signal only if the generation of a logic signal due to the comparison of the first component INP of the differential signal with one of the first logic threshold TH_LO or the second logic threshold TH_HI corresponds to the generation of a logic signal due to the comparison of the second component INM of the differential signal with the other of the first or second logic threshold. Indeed, the logic circuit 10 comprises a circuit 11 which comprises, in turn, as shown in figure 13, two AND logic ports SEQ1 and SEQ2 having at the input the signals PM, MM, MP and PP and having at the output logic pulses PULSE-P and PULSE_N only if the sequence is that shown in figure 14. Otherwise, if there is a disturbance, as shown in figure 12, the output of the AND port SEQ1 remains zero.

Furthermore the presented system introduces a further grade of disturbance immunity.

Discriminator 7 still preferably comprises control means adapted to set up a given time period TIME_WINDOW starting from the generation of the first pulse PULSE-P or PULSE_N of said other means; the control means are adapted to check whether within said time period the second pulse PULSE-N or PULSE_P is generated and are adapted to trigger said decoding means of the received signal only if the check result is positive. Circuit 11 is adapted to implement the control function on the time sequence of the logic signals. Indeed, the signals PULSE_P and PULSE N are at the input of two latches P LATCH and N LATCH having at the output the signals P_L, P L NEG and N_L, N_L_NEG. The signals PULSE_P and PULSE_N are at the input of a NOR port POR_N, the output of which is at the input of another latch TW; the output Q of the latch TW is at the input of a delay cell DEL adapted to provide the time window TIME_WINDOW as the reset signal R of the latches TW, P_LATCH and N_LATCH. If a first couple of pulses between the pulses PM, MM, MP and PP meeting the described conditions comes, the time window TIME_WINDOW, the duration of which depends on the expected duration of the pulses, is started. If within such a time window the predicted couple of pulses comes, the clock signal and the data synchronous therewith are decoded. Whether the second couple of pulses did not present within the window, the signal which generated the first couple of pulses would be interpreted as a disturbance and thereby clock and data would not be decoded. The clock and data recovery circuit 12 comprises an AND port CLOCKPULSE having at the input the signals P_L and N_L and the output of which is at the input of the latch CKFF providing the clock signal CLOCK; therefore, said clock signal CLOCK is decoded through the logic port CLOCKPULSE and the latch CKFF only if the two couples of pulses are correctly received.

Therefore, the discriminator 7 may have three filtering levels of disturbances: a hysteresis between the detection thresholds of the pulses within which the differential noise or the common-mode noise is ignored, the need for the first couple of pulses to come according to the sequence in figure 14, the need for the second couple of pulses to come according to the sequence in figure 14.

Furthermore, the time window TIME_WINDOW ensures that the system does not indefinitely keep on waiting for the second couple of pulses.

The same device 12 allows the data to be decoded. The device 12 comprises an AND port DATA_HIGH having at the input the signals P_L and N_L_NEG and the output of which is at the input of the latch DATASET, the output Q of which is at the input of an AND port 122. The device 12 also comprises an AND port DATA_LOW having at the input the signals N_L and P_L_NEG and the output of which is at the input of the latch DATARESET, the output Q denied of which is at the input of the AND port 122. A further latch DATA_OUT has the output of the port 122 at the input D carrying the data at the output by means of the signal DATA-DECODED only if the clock signal CLOCK is present at the input, i.e. only if the clock signal CLOCK is decoded.

A receiver 4 may be implemented, comprising the input stage coupled to the turn L2 and provided with the disturbance rejection circuit 6 or the circuit consisting of the circuital blocks 51, 53 and 54 and the decoder 70 of the known type for decoding the received signal, in accordance with the first embodiment of the invention.

A receiver 4 may also be implemented, comprising the discriminator 7 in accordance with the second embodiment of the invention and preferably an amplifier of the known type 55 arranged between the turn L2 and the input of the discriminator 7.

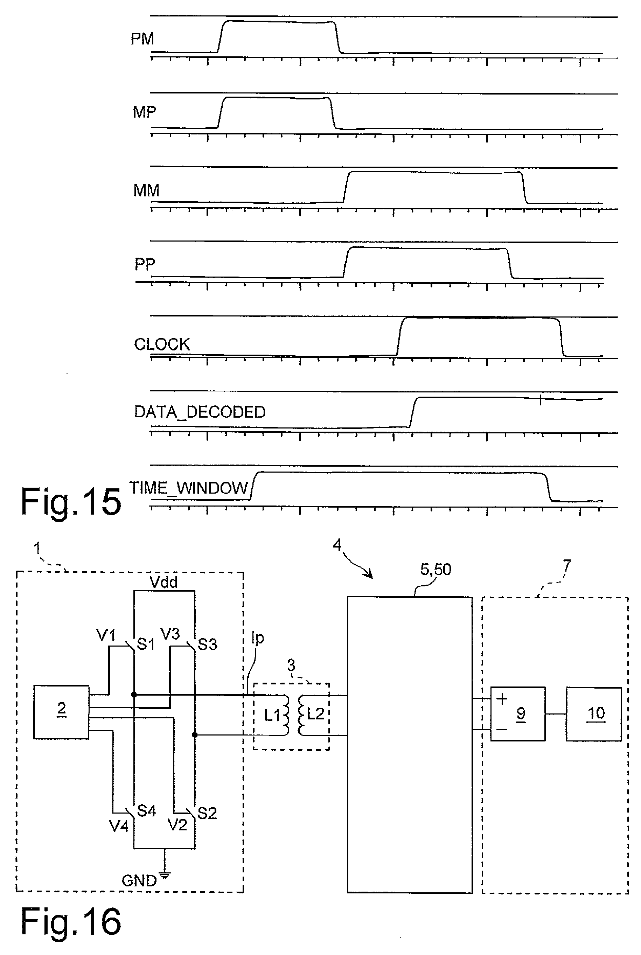

A receiver 4 may also be implemented, in accordance with a third embodiment of the invention, comprising both the input stage 5, 50 coupled to the turn L2 and provided with the disturbance rejection circuit 6 or the circuit consisting of the circuit blocks 51, 53 and 54, as denoted in the first embodiment of the invention and its variations, and the discriminator 7, as denoted in the second embodiment of the invention, to obtain a more-disturbance immune receiver 4, as shown in figure 16.

**Claims**

1. A receiver (4) of a signal communication system, said system comprising a transmitter (1) adapted to transmit at least a coded signal, said receiver (4) for receiving the signal, and a wireless interface (3) interposed between the transmitter and the receiver and comprising a transmitting antenna (L1) and a receiving antenna (L2), said receiver comprising decoding means (12) of the received signal, wherein the receiver comprises first means (9, 10) coupled with the receiving antenna (L2) and capable of triggering said decoding means of the received signal if the value of the received signal is outside a logic hysteresis consisting of a first logic threshold (TH_LO) having a value smaller than the value of the direct current component of the received signal and a second logic threshold (TH_HI) having a value greater than the value of the direct current component (Irdc) of the received signal, said first means (9, 10) comprising second means (91-94) adapted to compare said received signal (Ir) to said first and said second logic thresholds and generate logic signals (PM, MM, MP, PP) only if the value of said received signal is below said first logic threshold or above said second logic threshold, said received signal being a differential signal with a first component (INP) and a second component (INM) and said second means (91-94) being adapted to compare the components of the differential signal received to said first (TH_LO) and said second (TH_HI) logic thresholds and to generate logic signals only if the value of one of said components of the received differential signal is below said first logic threshold or above said second logic threshold and the other component of the differential signal is respectively above said second logic threshold or below said first logic threshold, said first means (9, 10) comprising third means (SEQ1, SEQ2) adapted to generate a pulse (PULSE_P, PULSE_N) to trigger said decoding means (12) of the received signal only if the generation of a logic signal (PM, MM, MP, PP) due to the comparison of the first component of the differential signal to one of the first and second logic thresholds corresponds to the generation of a logic signal due to the comparison of the second component of the differential signal with the other of the first or second logic threshold.

2. A receiver according to claim 1, wherein said first means (9, 10) comprise control means (POR_N, TW, DEL, P_LATCH, N_LATCH, CLOCKPULSE) adapted to set up a time period (TIME_WINDOW) starting from the generation of the first pulse (PULSE_P, PULSE_N) of said third means and due to the generation of a first couple of logic signals, said control means being adapted to check whether within said time period a second pulse is generated, following the first and due to the generation of a second couple of logic signals, and being adapted to trigger said decoding means (12) of the received signal only if the result of the check is positive.

3. A receiver according to any one of the preceding claims, wherein said decoding means (12) of the received signal are adapted to take out a clock signal (CK) and a data signal (DATA) from the received signal.

4. A receiver according to claim 3 as depending on claim 2, wherein the third means (SEQ1, SEQ2) are two AND ports adapted to provide at the output the first and second pulses (PULSE_P, PULSE_N) and having at the input the first and second couples of logic signals, said control means comprise a first latch (P_LATCH) having at the input the first pulse and a second latch (N_LATCH) having at the input the second pulse and said time period (TIME_WINDOW) as a reset signal, said first and second latches providing a couple of other pulses (P_L, N_L) at the output if both the first and the second pulses are present at the input, said couple of pulses (P_L, N_L) being adapted to trigger said decoding means (12) of the received signal.

5. A receiver according to claim 1, wherein said transmitter comprises means (2) adapted to code the data signal (DATA) to be sent and the clock signal (CK) by means of a plurality of currents transmission pulses each having a form of the Gaussian type, said received signal (Ir) comprising a positive pulse with a maximum width (Vpp) at the uplink form of the single transmission pulse (Ip) and a negative pulse having a minimum width equal to the absolute value of the maximum width of the positive pulse at the downlink form of the single transmission pulse (Ip).

6. A signal communication apparatus comprising a transmitter (1) adapted to transmit at least a signal, a receiver (4) for receiving the signal and a wireless interface (3) interposed between the transmitter and the receiver and comprising a transmitting antenna (L1) and a receiving antenna (L2), said receiver comprising means for decoding the received signal, wherein said receiver is referred to as in any one of the preceding claims.

7. An apparatus according to claim 6, wherein said transmitter comprises four switches (S1-S4, S2-S3) in a bridge configuration bonded between the supply voltage (Vdd) and the ground (GND) and having the middle points bonded to the transmitting antenna (L2), said means (2) of the transmitter being adapted to generate at the positive side of the clock signal (CK) a pulse of substantially the same duration as that of the currents pulse (Ip) to be transmitted, said pulse being at the input with the data signal (DATA) and a demultiplexer (23-26) comprising four AND ports, said demultiplexer being adapted to generate four signals for driving the switches (S1-S4) according to the logic level of the data signal (DATA) to be transmitted.

8. A method for receiving a signal, said signal being transmitted in a coded way, wherein the method comprises a step of controlling the decoding of the received signal (Ir) if the value of the received signal is outside a logic hysteresis consisting of a first logic threshold (TH_LO) having a value smaller than the value of the direct current component of the received signal and a second logic threshold (TH_HI) having a value greater than the value of the direct current component (Irdc) of the received signal, said step of controlling comprising comparing said received signal to said first and second logic thresholds and generating logic signals (PM, MM, MP, PP) only if the value of said received signal is below said first logic threshold or above said second logic threshold, said received signal being a differential signal with first (INP) and second (INM) components, said step of controlling comprising comparing the components of the differential signal received with said first logic threshold (TH_LO) and said second logic threshold (TH_HI) and generating logic signals only if the value one of said components of the received differential signal is below said first logic threshold or above said second logic threshold and the other component of the differential signal is respectively above said second logic threshold or below said first logic threshold, said step of controlling comprising generating pulses (PULSE_P, PULSE_N) for triggering the decoding of the received signal only if the generation of a logic signal due to the comparison of the first component of the differential signal with one of the first and second logic thresholds corresponds to the generation of a logic signal due to the comparison of the second component of the differential signal with the other of the first or second logic threshold.

9. A method according to claim 8, wherein said step of controlling comprises setting up a time period (TIME_WINDOW) starting from the generation of the first pulse (PULSE_P, PULSE_N) due to the generation of a first couple of logic signals, said step of controlling comprising checking if, within said time period, a second pulse is generated, following the first and due to the generation of a second couple of logic signals, and controlling the decoding of the received signal only if the result of the check is positive.

**Patentansprüche**

1. Empfänger (4) eines Signalkommunikationssystems, wobei das System einen Sender (1), der dazu ausgebildet ist, mindestens ein kodiertes Signal zu senden, den Empfänger (4) zum Empfangen des Signals und eine drahtlose Schnittstelle (3), die zwischen dem Sender und dem Empfänger angeordnet ist und eine Sendeantenne (L1) und eine Empfangsantenne (L2) aufweist, aufweist, wobei der Empfänger eine Dekodiereinrichtung (12) zum Dekodieren des empfangenen Signals aufweist, wobei der Empfänger eine erste Einrichtung (9, 10) aufweist, die mit der Empfangsantenne (L2) gekoppelt ist und dazu in der Lage ist, die Dekodiereinrichtung zum Dekodieren des empfangenen Signals auszulösen, wenn der Wert des empfangenen Signals sich außerhalb einer Logik-Hysterese befindet, die aus einem ersten Logik-Schwellenwert (TH_LO) mit einem Wert, der kleiner ist als der Wert der Gleichstromkomponente des empfangenen Signals, und einem zweiten Logik-Schwellenwert (TH_HI) mit einem Wert, der größer ist als der Wert der Gleichstromkomponente (Irdc) des empfangenen Signals, gebildet ist, wobei die erste Einrichtung (9, 10) eine zweite Einrichtung (91-94) aufweist, die dazu ausgebildet ist, das empfangene Signal (Ir) mit dem ersten und dem zweiten Logik-Schwellenwert zu vergleichen und Logik-Signale (PM, MM, MP, PP) nur dann zu erzeugen, wenn der Wert des empfangenen Signals sich unterhalb des ersten Logik-Schwellenwerts oder oberhalb des zweiten Logik-Schwellenwerts befindet, wobei das empfangene Signal ein Differentialsignal mit einer ersten Komponente (INP) und einer zweiten Komponente (INM) ist und die zweite Einrichtung (91-94) dazu ausgebildet ist, die Komponenten des empfangenen Differentialsignal mit dem ersten (TH_LO) und dem zweiten (TH_HI) Logik-Schwellenwert zu vergleichen und Logiksignale nur dann zu erzeugen, wenn der Wert einer der Komponenten des empfangenen Differentialsignals sich unterhalb des ersten Logik-Schwellenwerts oder oberhalb des zweiten Logik-Schwellenwerts befindet und die andere Komponente des Differentialsignals sich entsprechend oberhalb des zweiten Logik-Schwellenwerts bzw. unterhalb des ersten Logik-Schwellenwerts befindet, wobei die erste Einrichtung (9, 10) eine dritte Einrichtung (SEQ1, SEQ2) aufweist, die dazu ausgebildet ist, einen Impuls (PULSE_P, PULSE_N) zu erzeugen, um die Dekodiereinrichtung (12) zum Dekodieren des empfangenen Signals nur dann auszulösen, wenn die Erzeugung eines Logiksignals (PM, MM, MP, PP) auf Grund des Vergleichs der ersten Komponente des Differentialsignals mit einem des ersten und des zweiten Logik-Schwellenwerts der Erzeugung eines Logiksignals auf Grund des Vergleichs der zweiten Komponente des Differentialsignals mit dem anderen des ersten oder des zweiten Logik-Schwellenwerts entspricht.

2. Empfänger nach Anspruch 1, wobei die erste Einrichtung (9, 10) eine Steuereinrichtung (POR_N, TW, DEL, P_LATCH, N_LATCH, CLOCKPULSE) aufweist, die dazu ausgebildet ist, eine Zeitperiode (TIME_WINDOW) einzustellen, die mit der Erzeugung des ersten Impulses (PULSE_P, PULSE N) durch die dritte Einrichtung beginnt, auf Grund der Erzeugung eines ersten Paars Logiksignale, wobei die Steuereinrichtung dazu ausgebildet ist, zu überprüfen, ob in der Zeitperiode ein zweiter Impuls erzeugt wird, der auf den ersten folgt, auf Grund der Erzeugung eines zweiten Paars Logiksignale und dazu ausgebildet ist, die Dekodiereinrichtung (12) zum Dekodieren des empfangenen Signals nur dann auszulösen, wenn das Ergebnis der Überprüfung positiv ist.

3. Empfänger nach einem der vorhergehenden Ansprüche, wobei die Dekodiereinrichtung (12) zum Dekodieren des empfangenen Signals dazu ausgebildet ist, ein Taktsignal (CK) und ein Datensignal (DATA) aus dem empfangenen Signal zu entnehmen.

4. Empfänger nach Anspruch 3 als abhängig von Anspruch 2, wobei die dritte Einrichtung (SEQ1, SEQ2) aus zwei UND-Anschlüssen gebildet ist, die dazu ausgebildet sind, am Ausgang den ersten und den zweiten Impuls (PULSE_P, PULSE N) zu liefern, und am Eingang das erste und das zweite Paar Logiksignale hat, wobei die Steuereinrichtung einen ersten Latch (P_LATCH) mit dem ersten Impuls am Eingang und einen zweiten Latch (N_LATCH) mit dem zweiten Impuls am Eingang und mit der Zeitperiode (TIME_WINDOW) als ein Rücksetzsignal aufweist, wobei der erste und der zweite Latch ein Paar anderer Impulse (P_L, N_L) am Ausgang liefern, wenn sowohl der erste als auch der zweite Impuls am Eingang vorhanden sind, wobei das Paar Impulse (P_L, N_L) dazu ausgebildet ist, die Dekodiereinrichtung (12) zum Dekodieren des empfangenen Signals auszulösen.

5. Empfänger nach Anspruch 1, wobei der Sender eine Einrichtung (2) aufweist, die dazu ausgebildet ist, das zu schickende Datensignal (DATA) und das Taktsignal (CK) mittels einer Mehrzahl von Strom-Übertragungsimpulsen zu kodieren, von denen jeder eine Form vom Gaußschen Typ hat, wobei das empfangene Signal (Ir) einen positiven Impuls mit einer maximalen Breite (Vpp) an der Uplink-Form des Einzel-Übertragungsimpulses (Ip) und einen negativen Impuls mit einer minimalen Breite gleich dem Absolutwert der maximalen Breite des positiven Impulses an der Downlink-Form des einzelnen Übertragungsimpulses (Ip) aufweist.

6. Signalkommunikationsvorrichtung mit einem Sender (1), der dazu ausgebildet ist, mindestens ein Signal zu senden, einem Empfänger (4) zum Empfangen des Signals und einer drahtlosen Schnittstelle (3), die zwischen dem Sender und dem Empfänger angeordnet ist und eine Sendeantenne (L1) und eine Empfangsantenne (L2) aufweist, wobei der Empfänger eine Einrichtung zum Dekodieren des empfangenen Signals aufweist, wobei auf den Empfänger nach einem der vorhergehenden Ansprüche Bezug genommen wird.

7. Vorrichtung nach Anspruch 6, wobei der Sender vier Schalter (S1-S4, S2-S3) in einer Brückenkonfiguration aufweist, die zwischen die Versorgungsspannung (Vdd) und die Masse (GND) gebondet sind und deren Mittelpunkte an die Sendeantenne (L1) gebondet sind, wobei die Einrichtung (2) des Senders dazu ausgebildet ist, an der positiven Seite des Taktsignals (CK) einen Impuls mit im Wesentlichen der gleichen Dauer wie die der zu sendenden Stromimpulse (Ip) zu erzeugen, wobei der Impuls am Eingang mit dem Datensignal (DATA) ist, und ein Demultiplexer (23-26) vier UND-Anschlüsse aufweist, wobei der Demultiplexer dazu ausgebildet ist, vier Signale zum Treiben der Schalter (S1-S4) gemäß dem Logikpegel des zu sendenden Datensignals (DATA) zu erzeugen.

8. Verfahren zum Empfangen eines Signals, wobei das Signal auf eine kodierte Weise gesendet wird, wobei das Verfahren einen Schritt des Steuerns der Dekodierung des empfangenen Signals (Ir) beinhaltet, wenn der Wert des empfangenen Signals sich außerhalb einer Logik-Hysterese befindet, die aus einem ersten Logik-Schwellenwert (TH_LO) mit einem Wert, der kleiner ist als der Wert der Gleichstromkomponente des empfangenen Signals, und einem zweiten Logik-Schwellenwert (TH_HI) mit einem Wert, der größer ist als der Wert der Gleichstromkomponente (Irdc) des empfangenen Signals, gebildet ist, wobei der Schritt des Steuerns das Vergleichen des empfangenen Signals mit dem ersten und dem zweiten Logik-Schwellenwert und das Erzeugen von Logik-Signalen (PM, MM, MP, PP) nur dann, wenn der Wert des empfangenen Signals sich unterhalb des ersten Logik-Schwellenwerts oder oberhalb des zweiten Logik-Schwellenwerts befindet, beinhaltet, wobei das empfangene Signal ein Differentialsignal mit einer ersten Komponente (INP) und einer zweiten Komponente (INM) ist, wobei der Schritt des Steuerns das Vergleichen der Komponenten des empfangenen Differentialsignals mit dem ersten (TH_LO) Logik-Schwellenwert und dem zweiten (TH_HI) Logik-Schwellenwert und das Erzeugen von Logiksignalen nur dann, wenn der Wert einer der Komponenten des empfangenen Differentialsignals sich unterhalb des ersten Logik-Schwellenwerts oder oberhalb des zweiten Logik-Schwellenwert befindet und die andere Komponente des Differentialsignals sich entsprechend oberhalb des zweiten Logik-Schwellenwerts bzw. unterhalb des ersten Logik-Schwellenwerts befindet, beinhaltet, wobei der Schritt des Steuerns das Erzeugen von Impulsen (PULSE_P, PULSE N) beinhaltet, um die Dekodierung des empfangenen Signals nur dann auszulösen, wenn die Erzeugung eines Logiksignals auf Grund des Vergleichs der ersten Komponente des Differentialsignals mit einem des ersten und des zweiten Logik-Schwellenwerts der Erzeugung eines Logiksignals auf Grund des Vergleichs der zweiten Komponente des Differentialsignals mit dem anderen des ersten oder des zweiten Logik-Schwellenwerts entspricht.

9. Verfahren nach Anspruch 8, wobei der Schritt des Steuerns das Einstellen einer Zeitperiode (TIME_WINDOW), die mit der Erzeugung des ersten Impulses (PULSE_P, PULSE N) beginnt, auf Grund der Erzeugung eines ersten Paars Logiksignale beinhaltet, wobei der Schritt des Steuerns das Überprüfen, ob in der Zeitperiode ein zweiter Impuls erzeugt wird, der auf den ersten folgt, auf Grund der Erzeugung eines zweiten Paars Logiksignale, und das Steuern der Dekodierung des empfangenen Signals nur dann, wenn das Ergebnis der Überprüfung positiv ist, beinhaltet.

**Revendications**

1. Récepteur (4) d'un système de communication de signaux, ledit système comprenant un émetteur (1) conçu pour émettre au moins un signal codé, ledit récepteur (4) pour recevoir le signal, et une interface sans fil (3) intercalée entre l'émetteur et le récepteur et comprenant une antenne émettrice (L1) et une antenne réceptrice (L2), ledit récepteur comprenant des moyens de décodage (12) du signal reçu, dans lequel le récepteur comprend des premiers moyens (9, 10) couplés à l'antenne réceptrice (L2) et capables de déclencher lesdits moyens de décodage du signal reçu si la valeur du signal reçu est en dehors d'une hystérésis logique constituée d'un premier seuil logique (TH_LO) ayant une valeur inférieure à la valeur de la composante de courant continu du signal reçu et d'un second seuil logique (TH_HI) ayant une valeur supérieure à la valeur de la composante de courant continu (Irdc) du signal reçu, lesdits premiers moyens (9, 10) comprenant des deuxièmes moyens (91-94) conçus pour comparer ledit signal reçu (Ir) auxdits premier et second seuils logiques et générer des signaux logiques (PM, MM, MP, PP) seulement si la valeur dudit signal reçu est au-dessous dudit premier seuil logique ou au-dessus dudit second seuil logique, ledit signal reçu étant un signal différentiel ayant une première composante (INP) et une seconde composante (INM) et lesdits deuxièmes moyens (91-94) étant conçus pour comparer les composantes du signal différentiel reçu auxdits premier (TH_LO) et second (TH_HI) seuils logiques et pour générer des signaux logiques seulement si la valeur de l'une desdites composantes du signal différentiel reçu est au-dessous dudit premier seuil logique ou au-dessus dudit second seuil logique et l'autre composante du signal différentiel est respectivement au-dessus dudit second seuil logique ou au-dessous dudit premier seuil logique, lesdits premiers moyens (9, 10) comprenant des troisièmes moyens (SEQ1, SEQ2) conçus pour générer une impulsion (PULSE_P, PULSE_N) servant à déclencher lesdits moyens de décodage (12) du signal reçu seulement si la génération d'un signal logique (PM, MM, MP, PP) due à la comparaison de la première composante du signal différentiel à l'un des premier et second seuils logiques correspond à la génération d'un signal logique due à la comparaison de la seconde composante du signal différentiel à l'autre des premier et second seuils logiques.

2. Récepteur selon la revendication 1, dans lequel lesdits premiers moyens (9, 10) comprennent des moyens de commande (POR_N, TW, DEL, P_LATCH, N_LATCH, CLOCKPULSE) conçus pour établir une période de temps (TIME_WINDOW) commençant à la génération de la première impulsion (PULSE_P, PULSE_N) desdits troisièmes moyens et due à la génération d'un premier couple de signaux logiques, lesdits moyens de commande étant conçus pour vérifier si, dans ladite période de temps, une seconde impulsion est générée, suivant la première et due à la génération d'un second couple de signaux logiques, et étant conçus pour déclencher lesdits moyens de décodage (12) du signal reçu seulement si le résultat de la vérification est positif.

3. Récepteur selon l'une quelconque des revendications précédentes, dans lequel lesdits moyens de décodage (12) du signal reçu sont conçus pour extraire un signal d'horloge (CK) et un signal de données (DATA) du signal reçu.

4. Récepteur selon la revendication 3 lorsqu'elle dépend de la revendication 2, dans lequel les troisièmes moyens (SEQ1, SEQ2) sont deux portes ET conçues pour délivrer en sortie les première et seconde impulsions (PULSE_P, PULSE_N) et recevant en entrée les premier et second couples de signaux logiques, lesdits moyens de commande comprennent un premier verrou (P_LATCH) recevant en entrée la première impulsion et un second verrou (N_LATCH) recevant en entrée la seconde impulsion et ayant ladite période de temps (TIME_WINDOW) comme signal de réinitialisation, lesdits premier et second verrous délivrant en sortie un couple d'autres impulsions (P_L, N_L) si les première et seconde impulsions sont toutes les deux présentes à l'entrée, ledit couple d'impulsions (P_L, N_L) étant conçu pour déclencher lesdits moyens de décodage (12) du signal reçu.

5. Récepteur selon la revendication 1, dans lequel ledit émetteur comprend des moyens (2) conçus pour coder le signal de données (DATA) à envoyer et le signal d'horloge (CK) au moyen d'une pluralité d'impulsions de courant d'émission ayant chacune une forme du type gaussien, ledit signal reçu (Ir) comprenant une impulsion positive ayant une largeur maximale (Vpp) au niveau du flanc montant de l'impulsion d'émission individuelle (Ip) et une impulsion négative ayant une largeur minimale égale à la valeur absolue de la largeur maximale de l'impulsion positive au niveau du flanc descendant de l'impulsion d'émission individuelle (Ip).

**6.** Appareil de communication de signaux comprenant un émetteur (1) conçu pour émettre au moins un signal, un récepteur (4) pour recevoir le signal et une interface sans fil (3) intercalée entre l'émetteur et le récepteur et comprenant une antenne émettrice (L1) et une antenne réceptrice (L2), ledit récepteur comprenant des moyens pour décoder le signal reçu, dans lequel ledit récepteur est conforme à l'une quelconque des revendications précédentes.

**7.** Appareil selon la revendication 6, dans lequel ledit émetteur comprend quatre commutateurs (S1-S4, S2-S3) dans une configuration en pont connectée entre la tension d'alimentation (Vdd) et la masse (GND) et ayant des points intermédiaires connectés à l'antenne émettrice (L1), lesdits moyens (2) de l'émetteur étant conçus pour générer, du côté positif du signal d'horloge (CK), une impulsion sensiblement de la même durée que celle de l'impulsion de courant (Ip) à émettre, ladite impulsion étant présente à l'entrée avec le signal de données (DATA), et un démultiplexeur (23-26) comprenant quatre portes ET, ledit démultiplexeur étant conçu pour générer quatre signaux servant à piloter les commutateurs (S1-S4) en fonction du niveau logique du signal de données (DATA) à émettre.

**8.** Procédé de réception d'un signal, ledit signal étant émis d'une manière codée, dans lequel le procédé comprend une étape de commande du décodage du signal reçu (Ir) si la valeur du signal reçu est en dehors d'une hystérésis logique constituée d'un premier seuil logique (TH_LO) ayant une valeur inférieure à la valeur de la composante de courant continu du signal reçu et d'un second seuil logique (TH_HI) ayant une valeur supérieure à la valeur de la composante de courant continu (Irdc) du signal reçu, ladite étape de commande comprenant la comparaison dudit signal reçu auxdits premier et second seuils logiques et la génération de signaux logiques (PM, MM, MP, PP) seulement si la valeur dudit signal reçu est au-dessous dudit premier seuil logique ou au-dessus dudit second seuil logique, ledit signal reçu étant un signal différentiel ayant des première (INP) et seconde (INM) composantes, ladite étape de commande comprenant la comparaison des composantes du signal différentiel reçu audit premier seuil logique (TH_LO) et audit second seuil logique (TH_HI) et la génération de signaux logiques seulement si la valeur de l'une desdites composantes du signal différentiel reçu est au-dessous dudit premier seuil logique ou au-dessus dudit second seuil logique et l'autre composante du signal différentiel est respectivement au-dessus dudit second seuil logique ou au-dessous dudit premier seuil logique, ladite étape de commande comprenant la génération d'impulsions (PULSE_P, PULSE_N) servant à déclencher le décodage du signal reçu seulement si la génération d'un signal logique due à la comparaison de la première composante du signal différentiel à l'un des premier et second seuils logiques correspond à la génération d'un signal logique due à la comparaison de la seconde composante du signal différentiel à l'autre des premier et second seuils logiques.

**9.** Procédé selon la revendication 8, dans lequel ladite étape de commande comprend l'établissement d'une période de temps (TIME_WINDOW) commençant à la génération de la première impulsion (PULSE_P, PULSE_N) due à la génération d'un premier couple de signaux logiques, ladite étape de commande comprenant l'opération consistant à vérifier si, dans ladite période de temps, une seconde impulsion est générée, suivant la première et due à la génération d'un second couple de signaux logiques, et la commande du décodage du signal reçu seulement si le résultat de la vérification est positif

Fig.1

Fig.2

EP 2 282 405 B1

**Fig.3**

**Fig.4**

DATA

CK

DR1
23 ▷ V1

DR2
24 ▷ V2

22

21

DR3
25 ▷ V3

DR4
26 ▷ V4

# Fig.5

5

70

Ip

3

Ir

IN1

INP

L1

L2

RMC1

Vcm

RMC2

IN2

8

INM

GND

Vbias1

Vdd

DIFFAMP

61

T1

T2

REF1

6

GND

Vbias2

# Fig.6a

Fig.6b

Fig.10b

Fig.7

Fig.8

Fig.9

Fig.10

Fig.11

Fig.13

# Fig.12

Fig.14

PM

MP

MM

PP

CLOCK

DATA_DECODED

**Fig.15** TIME_WINDOW

**Fig.16**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080311862 A
- US 20080069249 A
- WO 2004042543 A1
- US 4833418 A
- WO 03009551 A2